# EUROPEAN PATENT APPLICATION

(11) **EP 2 236 481 A2**
(43) Date of publication of application: **06.10.2010**
(21) Application number: 10250439.6
(22) Date of filing: 10.03.2010
(51) Int. Cl.: C04B 37/00, C04B 38/00

(54) **Honeycomb structure and method for manufacturing the same**

(30) Priority: 30.03.2009 JP 2009081581
(71) Applicant: NGK Insulators, Ltd., Nagoya-City, Aichi Pref. 467-8530 (JP)
(72) Inventor: Omiya, Yoshimasa, Nagoya City, Aichi-ken, 467-8530 (JP)
(74) Representative: Paget, Hugh Charles Edward

(57) **Abstract**

There is provided a honeycomb structure 1 obtained by unitarily bonding a plurality of honeycomb segments 3 having a plurality of cells separated and formed by porous partition walls and extending through between two end faces 11, 12 with a bonding material 5 in a direction perpendicular to an axial direction of the cells. At least a part of the bonding material 5 extending in the axial direction of the cells in a cross section in parallel with the axial direction of the cells of the honeycomb structure 1 has continuously increasing thickness from the end portions toward a central portion in the axial direction of the cells. In the honeycomb structure, without raising pressure loss, thermal shock resistance is improved by enhancing thermal stress relaxation ability in the central portion in the axial direction.

## Description

### Background of the Invention and Related Art Statement

The present invention relates to a honeycomb structure suitably used for a diesel particulate filter or the like and having excellent thermal shock resistance.

There has widely been used a honeycomb structure as a trapping filter for exhaust gas, for example, a diesel particulate filter (DPF) for trapping and removing particulate matter (PM) such as soot contained in exhaust gas.

In order to use such a honeycomb structure (filter) continuously for a long period of time, it is necessary to periodically subject the filter to a regeneration treatment. That is, in order to reduce pressure loss increased by PM deposited inside the filter with the passage of time to bring the filter performance back to the initial state, it is necessary to combust PM deposited inside the filter.

By the way, upon regeneration of the filter, the temperature rise in each portion of the filter by the combustion of PM tends to be uneven, and thermal stress is generated due to thermal expansion difference depending on the portions to cause a problem of generation of a defect such as a crack.

For such a problem, there has been proposed a method where a honeycomb structure is constituted of a plurality of honeycomb-shaped segments (honeycomb segments), which are unitarily bonded with a bonding material of an elastic material provided between segments (see, e.g., JP-A-8-28246).

Conventionally, a honeycomb structure having a structure where a plurality of honeycomb segments are unitarily bonded with a bonding material has been manufactured by a method where a plurality of honeycomb segments are independently manufactured in the first place and then piled up with applying a bonding material to have a predetermined thickness on the outer peripheral walls thereof, followed by hardening the bonding material. The thickness (width) of the bonding material between honeycomb segments is almost uniform over all.

However, since thermal expansion of the honeycomb segment upon filter regeneration tends to be large in the central portion in comparison with the end portion in the axial direction of the honeycomb segment, in a honeycomb structure having a bonding material having an almost uniform thickness over all between the honeycomb segments, thermal stress cannot be relaxed sufficiently, and there is a case that a crack is generated in the bonding portion to allow PM to leak outside the honeycomb structure from the crack.

Incidentally, it is possible to improve relaxation ability of the thermal stress by increasing the thickness of the bonding material between the honeycomb segments in whole. However, when the thickness of the bonding material increases in whole in the honeycomb structure having the same external dimensions, the opening area on the end faces of the honeycomb structure is decreased to make up for the increase of the bonding material thickness to cause the new problem of increasing pressure loss in the honeycomb structure.

### Summary of the Invention

The present invention has been made in view of such conventional problems and aims to provide a honeycomb structure having a structure where a plurality of honeycomb segments are unitarily bonded and having an improved thermal shock resistance by enhancing the thermal stress relaxation ability in the central portion in the axial direction without raising the pressure loss.

In order to achieve the aforementioned aim, according to the present invention, there is provided the following honeycomb structure and manufacturing method.

[1] A honeycomb structure obtained by unitarily bonding a plurality of honeycomb segments each having a plurality of cells separated and formed by porous partition walls and extending through between two end faces with a bonding material in a direction perpendicular to an axial direction of the cells, wherein at least a part of the bonding material extending in the axial direction of the cells in a cross section in parallel with the axial direction of the cells of the honeycomb structure has continuously increasing thickness from end portions toward a central portion in the axial direction of the cells.

[2] The honeycomb structure according to [1], wherein the central portion has a thickness of 1.0 to 4.0 mm in the bonding material having continuously increasing thickness from end portions toward the central portion in the axial direction of the cells.

[3] The honeycomb structure according to [1] or [2], wherein, when the thickness of the end portions and the thickness of the central portion are determined as A and B, respectively, in the bonding material having continuously increasing thickness from the end portions toward the central portion in the axial direction of the cells, the B/A value is 2 to 4.

[4] The honeycomb structure according to any one of [1] to [3], wherein plugging is performed in open portions of predetermined cells on one side end face and open portions of the other cells on the other side end face.

[5] A method for manufacturing a honeycomb structure comprising the steps of: forming kneaded clay obtained by kneading a forming raw material to manufacture a honeycomb formed article having a plurality of cells separated and formed by partition walls and extending through between two end faces, forming a plurality of slits from one end face of the honeycomb formed article toward the other end face without reaching the other end face to divide the honeycomb formed article into a plurality of segments in a slit formation region in the axial direction of the cells, firing the honeycomb formed article to obtain a honeycomb fired article, filling a bonding material into the slits in the honeycomb fired article and hardening the bonding material, and removing the portion from the end face which the slits do not reach to the end portions of the slits of the honeycomb fired article.

In a honeycomb structure of the present invention, since the thickness (width) of the bonding material having particularly large thermal expansion because of being brought into contact with the central portion in the axial direction of the cells of the honeycomb segments is increased, the stress generated by the thermal expansion can sufficiently be relaxed by the elasticity of the thick bonding material, and crack generation in the bonding portion due to the stress and the leakage of the PM outside the honeycomb structure can be inhibited. In addition, since the thickness of the end portions in the axial direction of the cells of the bonding material is thinner than that of the central portion of the bonding material, there is not a case that the pressure loss is raised by reducing the open area on the end faces of the honeycomb structure in exchange for the enhancement of the thermal stress relaxation ability. Further, according to a manufacturing method of the present invention, a honeycomb structure of the present invention can be manufactured simply.

### Brief Description of the Drawings

[Fig. 1] Fig. 1 is a schematic plan view of an end face showing an example of an embodiment of a honeycomb structure of the present invention.

[Fig. 2] Fig. 2 is schematic cross-sectional views of the I-I cross section of Fig. 1 and an enlarged cross section of a main section thereof.

[Fig. 3] Fig. 3 is a schematic cross-sectional view showing an embodiment where a part of the bonding material extending in the axial direction of the cells in the cross section in parallel with the axial direction of the cells of the honeycomb structure has a thickness continuously increasing from the end portions to the central portion in the axial direction of the cells.

[Fig. 4] Fig. 4 is a schematic cross-sectional view showing an embodiment where a part of the bonding material extending in the axial direction of the cells in the cross section in parallel with the axial direction of the cells of the honeycomb structure has a thickness continuously increasing from the end portions to the central portion in the axial direction of the cells.

[Fig. 5] Fig. 5 is a schematic perspective view showing a honeycomb structure having plugging portions provided in open portions of predetermined cells.

[Fig. 6] Fig. 6 is a schematic perspective view of a honeycomb formed article obtained in the course of the manufacturing process in a method for manufacturing a honeycomb structure of the present invention.

[Fig. 7] Fig. 7 is a schematic perspective view of a honeycomb formed article with slits formed therein obtained in the course of the manufacturing process in a method for manufacturing a honeycomb structure of the present invention.

[Fig. 8] Fig. 8 is a schematic perspective view of a honeycomb fired article obtained in the course of the manufacturing process in a method for manufacturing a honeycomb structure of the present invention.

[Fig. 9] Fig. 9 is a schematic perspective view of a honeycomb fired article with slits filled with a bonding material, the article being obtained in the course of the manufacturing process in a method for manufacturing a honeycomb structure of the present invention.

[Fig. 10] Fig. 10 is a schematic perspective view showing a process of removing the portion from the end face which the slits do not reach to the end portions of the slits of the honeycomb fired article in a method for manufacturing a honeycomb structure of the present invention.

### Reference Numerals

1: honeycomb structure, 3: honeycomb segment, 5: bonding material, 5': bonding material, 11: end face, 12: end face, 15: slit, 20: honeycomb formed article, 30: honeycomb fired article, 31: portion to be removed

### Detailed Description of the Invention

Hereinbelow, the present invention will be described on the basis of specific embodiments. However, the present invention should not be construed with limiting to these embodiments, and various changes, modifications, and improvements can be made based on knowledge of a person of ordinary skill in the art as long as they do not deviate from the scope of the present invention.

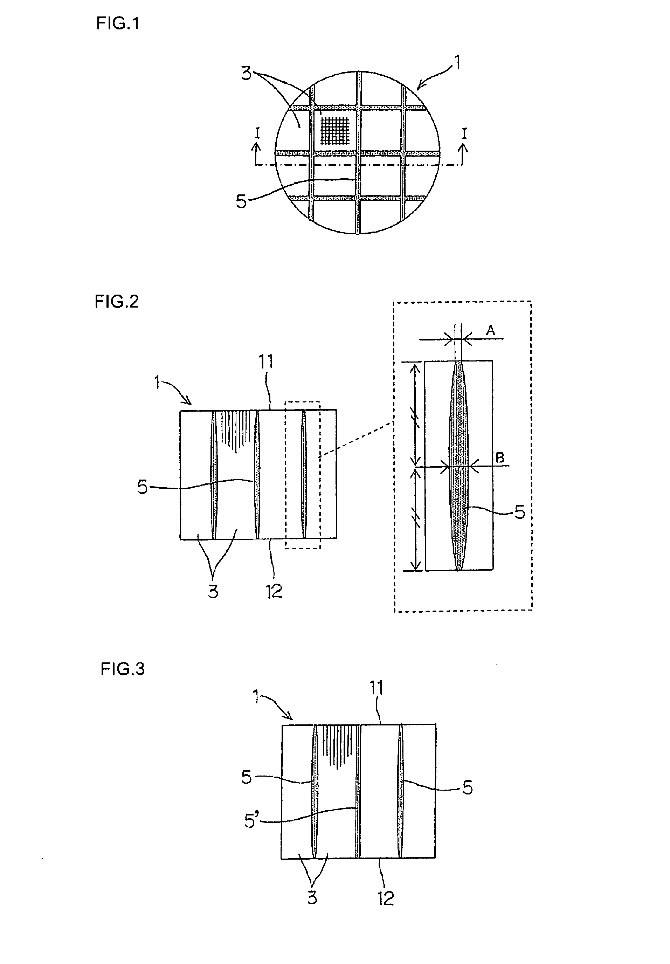

Fig. 1 is a schematic plan view of an end face showing an example of an embodiment of a honeycomb structure of the present invention, and Fig. 2 is schematic cross-sectional views of the I-I cross section of Fig. 1 and an enlarged cross section of a main section (section surrounded by dot-lines) thereof. As shown in these figures, the honeycomb structure 1 of the present invention is obtained by unitarily bonding a plurality of honeycomb segments 3 having a plurality of cells extending through between two end faces 11 and 12 and separated and formed by porous partition walls with a bonding material 5 in a direction perpendicular to the axial direction of the cells. As the main characteristic, it has a structure where at least a part of the bonding member 5 extending in the axial direction of the cells in a cross section in parallel with the axial direction of the cells of the honeycomb structure 1 has continuously increasing thickness from the end portions to the central portion in the axial direction of the cells.

As described above, in the case of performing a filter regeneration treatment of a honeycomb structure having a structure where a plurality of honeycomb segments are unitarily bonded with a bonding material as a DPF, thermal expansion of the honeycomb segments due to combustion heat of the PM deposited inside the structure tends to be large in the central portion in comparison with the end portions in the axial direction of the honeycomb segments.

Therefore, in a honeycomb structure of the present invention, the thickness (width) of the bonding material brought into contact with the central portion in the axial direction of the cells of the honeycomb segments is increased to be able to sufficiently relax the stress generated due to the thermal expansion by the elasticity of the thick bonding material. In addition, in a honeycomb structure of the present invention, since the thickness of the end portions in the axial direction of the cells of the bonding material is made thinner than that of the bonding material in the central portion without increasing thickness of the bonding material over all, there is not a case that the pressure loss is raised by reducing the open area on the end faces of the honeycomb structure in exchange for the enhancement of the thermal stress relaxation ability as described above.

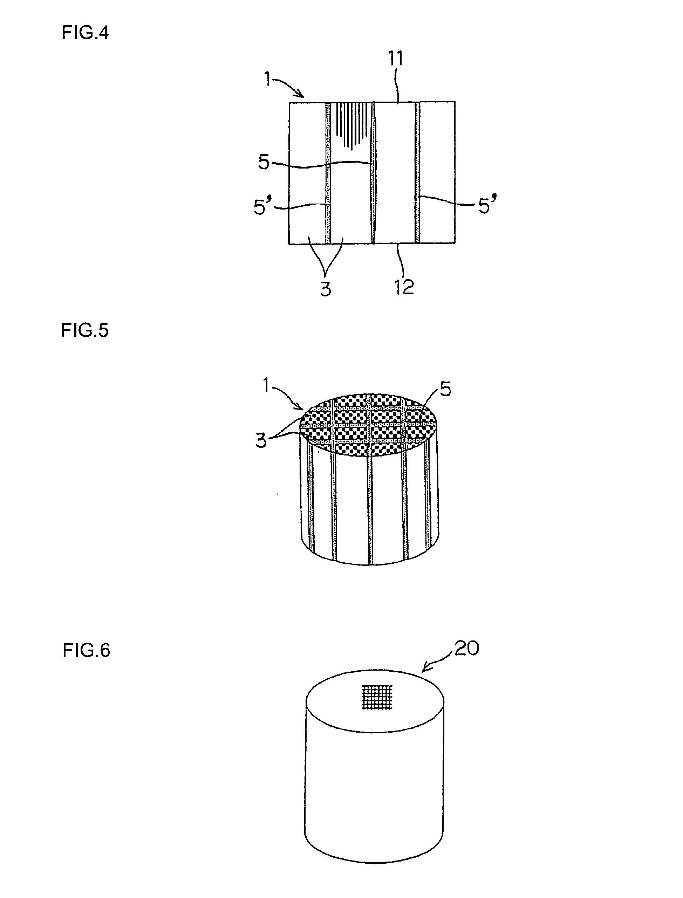

Incidentally, in the present invention, as shown in Fig. 2, it is preferable that all the bonding materials 5 extending in the axial direction of the cells in a cross section in parallel with the axial direction of the cells of the honeycomb structure 1 have thickness continuously increasing from the end portions to the central portion in the axial direction of the cells. However, as shown in Figs. 3 and 4, it is also possible that some of the bonding materials 5 extending in the axial direction of the cells in a cross section in parallel with the axial direction of the cells of the honeycomb structure 1 have thickness continuously increasing from the end portions to the central portion in the axial direction of the cells with the other bonding materials 5' having a uniform thickness from the end portions toward the central portion in the axial direction of the cells as conventional structures.

In the case of using a honeycomb structure of the present invention for a DPF, there is a case of causing a variance in temperature in the radial direction of the honeycomb structure depending on the piping layout or the like. Therefore, in such a case, the effect of the present invention can be obtained also by continuously increasing thickness of only the bonding materials in contact with honeycomb segments where thermal expansion in the central portion in the axial direction of the cells tends to be larger by particular temperature rise from the end portions to the central portion in the axial direction of the cells.

In a honeycomb structure 1 of the present invention, the central portion has a thickness B of preferably 1.0 to 4.0 mm, more preferably 1.5 to 4.0 mm, furthermore preferably 2.0 to 3.0 mm, in the bonding material 5 having continuously increasing thickness from the end portions toward the central portion in the axial direction of the cells. When the thickness B of the central portion is below 1.0 mm, high thermal stress generated by thermal expansion of the central portion in the axial direction of the cells of the honeycomb segments 3 cannot sufficiently be relaxed, and a crack may be caused in the bonding portion. On the other hand, when it is above 4.0 mm, the temperature gradient in the honeycomb segments 3 increases (temperature in the outside of the honeycomb segment 3 hardly rises due to the adiabatic effect by the bonding material 5, and the temperature gradient from temperature around the center of the honeycomb segment 3 becomes large) upon filter regeneration to raise internal stress of the honeycomb structure 1, which may easily cause a crack inversely. In addition, pressure loss may increase.

In addition, in the honeycomb structure 1 of the present invention, from the viewpoint of a balance between the thermal stress relaxation performance and pressure loss, the ratio B/A of the thickness B of the central portion to the thickness A of the end portions in the bonding material 5 having continuously increasing thickness from the end portions toward the central portion in the axial direction of the cells is preferably 2 to 4, more preferably 2 to 3.5, furthermore preferably 2 to 3. When the B/A value is below 2, when the thickness in the central portion sufficient for obtaining thermal stress relaxation performance is secured, thickness of the end portions becomes large to reduce the opening area in the end portions of the honeycomb structure, which may cause too much increase in pressure loss. On the other hand, when the B/A value is above 4, the central portion becomes too thick with the end portions becoming too thin, which may deteriorate thermal stress relaxation performance in the vicinity of the end portion.

In the case of using a honeycomb structure of the present invention as a trapping filter such as a DPF, plugging is preferably performed in open portions of predetermined cells on one side end face and open portions of the other cells on the other side end face. Specifically, as shown in Fig. 5, as a preferable embodiment, open end portions of predetermined cells are plugged to show a checkerwise pattern on one side end face, while open end portions of the other cells are plugged on the other side end face to show a checkerwise pattern complementary with the above checkerwise pattern. That is, plugging is performed in such a manner that open portions of adjacent cells are plugged on mutually opposite side end faces.

When a fluid containing PM such as soot is sent from one end face (inlet end face) of a plugged honeycomb structure, the fluid flows into the honeycomb structure from the cells whose open portions are unplugged on the one end face, passes through porous partition walls having filtration ability, and enters the other cells unplugged on the other end face (outlet end face) side. When the fluid passes through the partition walls, PM in the fluid is trapped by the partition walls, and the purified fluid where PM is removed is discharged from the other end face.

The external shape of a honeycomb structure of the present invention may be a desired shape such as a cylindrical shape and an oval shape. In addition, as the size of the honeycomb structure, for example, in the case of a cylindrical shape, the radius of the bottom face is preferably 18 to 250 mm, more preferably 50 to 150 mm. In addition, the length of the honeycomb structural portion in the central axial direction is preferably 80 to 400 mm, more preferably 100 to 310 mm.

The material in the portion other than the bonding materials of a honeycomb structure of the present invention is preferably ceramic. More specifically, because of excellent strength and thermal shock resistance, the material is preferably at least one kind selected from the group consisting of silicon carbide, silicon-silicon carbide based composite material, cordierite, mullite, alumina, spinel, silicon carbide-cordierite based composite material, lithium aluminum silicate, aluminum titanate, and iron-chrome-aluminum based alloy. Of these, silicon carbide or silicon-silicon carbide based composite material is particularly preferable.

In addition, the bonding material in a honeycomb structure of the present invention is required to have both bonding force (adhesiveness) capable of bonding honeycomb segments together and elasticity capable of relaxing stress generated by thermal expansion of the honeycomb segments. Specifically, as the material, there is preferably used a material obtained by filling slurry obtained by kneading a mixture of inorganic fibers, colloidal silica, clay, SiC particles, an organic binder, a resin balloon, a dispersant, and water into gaps between the honeycomb segments and hardening the slurry by drying or the like.

In a honeycomb structure of the present invention, the portion other than the bonding materials has an open porosity of preferably 30 to 80%, more preferably 40 to 65%. Such a range of the open porosity has an advantage that pressure loss can be reduced with maintaining the strength. When the open porosity is below 30%, pressure loss may become too high. On the other hand, when the open porosity is above 80%, strength may be deteriorated, or thermal conductivity may be deteriorated. Incidentally, the"openporosity"inthe present specification is a value obtained by measurement by the Archimedes method.

In addition, the portion other than the bonding materials has an average pore diameter of 5 to 50 µm, more preferably 7 to 35 µm. Such a range of the average pore diameter has an advantage that PM can effectively be trapped. When the average pore diameter is below 5 µm, clogging may easily be caused by particulate matter (PM). When the average pore diameter is above 50 µm, the particulate matter (PM) may pass through without being trapped by the filter. Incidentally, the "average pore diameter" in the present specification is a value obtained by measurement by a mercury porosimeter.

In addition, in a honeycomb structure of the present invention, an outer peripheral coat may be formed in the periphery thereof. There is no particular limitation on the material for the outer peripheral coat, and, for example, it may be formed by applying a mixture of inorganic fibers, colloidal silica, clay, SiC particles, an organic binder, a resin balloon, a dispersant, and water in the outer periphery, followed by drying and firing.

There is no particular limitation on the cell shape (cell shape in a cross section perpendicular to the axial direction of the cells) of a honeycomb structure of the present invention, and examples of the shape include a triangle, a quadrangle, a hexagon, an octagon, a circle, or a combination of them.

The thickness of the partition walls of a honeycomb structure of the present invention is preferably 50 to 2000 µm. When the thickness of the partition wall is below 50 µm, strength of the honeycomb structure may become too low. When it is above 2000 µm, pressure loss may become too large. Though there is no particular limitation on the cell density of a honeycomb structure of the present invention, it is preferably 0.9 to 311 cells/cm², more preferably 7.8 to 62 cells/cm².

Next, a method for manufacturing a honeycomb structure of the present invention will be described. In a method for manufacturing a honeycomb structure of the present invention, in the first place, kneaded clay obtained by kneading a forming raw material is formed to manufacture a honeycomb formed article 2 having a plurality of cells extending through between two end faces and separated and formed by partition walls as shown in Fig. 6.

As the forming raw material, a material obtained by adding a binder and water to a ceramic raw material is preferable. Further, as necessary, a surfactant and a pore former may be added.

As a preferable example of the ceramic raw material is at least one kind selected from the group consisting of silicon carbide, silicon-silicon carbide based composite material, cordierite, mullite, alumina, spinel, silicon carbide-cordierite based composite material, lithium aluminum silicate, aluminum titanate, and iron-chrome-aluminum based alloy. Of these, silicon carbide or silicon-silicon carbide based composite material is particularly preferable. In the case of using silicon-silicon carbide based composite material, a mixture of a silicon carbide powder and a metal silicon powder is employed as the ceramic raw material.

Examples of the binder include methyl cellulose, hydroxypropoxyl cellulose, hydroxyethyl cellulose, carboxymethyl cellulose, and polyvinyl alochohol. Of these, it is preferable to use methyl cellulose and hydroxypropyxyl cellulose in combination. The binder content is preferably 1 to 20 mass% with respect to the whole forming raw material.

The water content is preferably 18 to 45 mass% with respect to the whole forming raw material.

Examples of the surfactant include ethylene glycol, dextrin, fatty acid soap, and polyalcohol. These may be used alone or as a combination of two or more kinds. The surfactant content is preferably 0 to 5 mass% with respect to the whole forming raw material.

There is no particular limitation on the pore former as long as it forms pores after firing, and examples of the pore former include starch, a resin balloon, a water-absorbing resin, and silica gel. The pore former content is preferably 0 to 15 mass% with respect to the whole forming raw material.

In the case of manufacturing a honeycomb structure to be used as a DPF, the ceramic raw material has an average particle size of preferably 5 to 100 µm. Such a range of the average particle size has an advantage that porosity and pore diameter can easily be controlled to be suitable for the filter. When the average particle size of the ceramic raw material is smaller than 5 µm, the pore size may become too small. When it is larger than 100 µm, the porosity may become too small. When the pore size is too small, clogging tends to be caused by PM. When the porosity is too small, pressure loss may increase. Incidentally, the "average particle diameter" in the present specification is a value obtained by measurement according to JIS R 1629.

There is no particular limitation on the method for forming kneaded clay by kneading the forming raw material, and, for example, a method using a kneader or a vacuum kneader may be employed.

There is no particular limitation on the method for obtaining a honeycomb formed article by forming the kneaded clay, and a conventionally known method such as extrusion forming and injection forming may be employed. In particular, as a suitable example, there may be employed a method where a honeycomb formed article is formed by extrusion forming by the use of a die having a predetermined cell shape, partition wall thickness, and cell density. As the material for the die, superhard alloy which hardly wears is preferable.

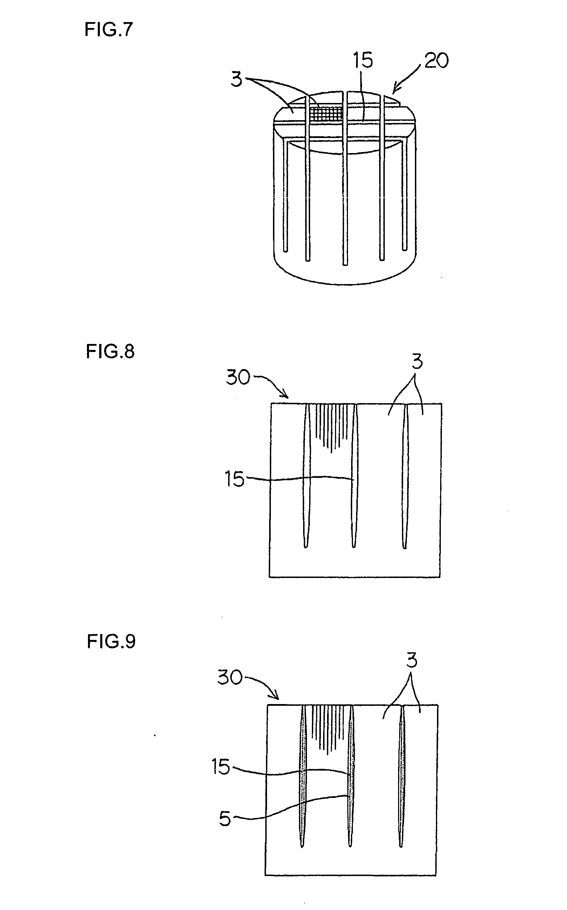

Next, as shown in Fig. 7, a plurality of slits 15 not reaching the other end face are formed from one end face toward the other end face of a honeycomb formed article 20 obtained above to separate the honeycomb formed article 20 into a plurality of segments 3 in a region where the slits 15 are formed in the axial direction of the cells. Incidentally, only the region where the slits 15 are formed in the axial direction of the cells are divided into a plurality of segments 3, and the segments 3 are unitarily joined in the other region where no slit 15 is formed in the axial direction of the cells (in the vicinity of the end face which the slits 15 do not reach). In addition, the width of the slits 15 is uniform over the whole axial direction of the cells at this point of time.

For the slit 15 formation, there can be used a disc-shaped multi grinding stone, a multi blade saw, a multi wire saw, a supersonic vibration blade, a low-frequency vibration blade, or the like. Incidentally, a honeycomb formed article is preferably dried before forming the slits. There is no particular limitation on the method for drying, and, there may be employed, for example, an electromagnetic wave heating method such as microwave drying and high-frequency dielectric heating drying and an external heating method such as hot air drying and superheated steam drying. Of these, in that a formed article can be dried quickly and uniformly without generating a crack, it is preferable to dry a certain amount of water by an electromagnetic wave heating method and then dry the remaining water by an external heating method. As the drying conditions, it is preferable that, after water of 30 to 90 mass% with respect to the water amount before drying is removed, the water amount is made to be 3 mass% or less by an external heating method. As the electromagnetic wave heating method, high-frequency dielectric heating drying is preferable, and, as the external heating method, hot air drying is preferable.

Subsequently, the honeycomb formed article 20 is fired. When the honeycomb formed article 20 having slits 15 formed therein as described above is fired, the central portion causes large firing shrinkage in comparison with the end portions in the axial direction of the cells of each of the segments 3 separated by the slits 15. As a result, as shown in Fig. 8, the slits 15 after firing have a shape where the width continuously increases from the end portions toward the central portions in the axial direction of the cells. The reason why the central portion causes large firing shrinkage in comparison with the end portions in the axial direction of the cells of each of the segments 3 is as follows. That is, since heat upon firing transfers from outside toward inside of each of the segments 3, a molten component (e.g., metal silicon powder which bonds silicon carbide particles serving as the framework in the case of manufacturing a honeycomb structure of a silicon-silicon carbide based composite material) contained in the honeycomb formed article 20 starts melting in the end portions prior to the central portion of each segment 3, and, by the time melting starts in the central portion, hardening has already started in the end portions. Therefore, the end portions cannot follow the shrinkage of the central portion, and, as a result, the segment 3 has more firing shrinkage in the central portion than in the end portions in the axial direction of the cells, and the slits 15 between the segments 3 has a shape where the width continuously increases from the end portions toward the central portions as a convex lens.

Incidentally, before firing, it is preferable to perform calcination in order to remove a binder and the like contained in a honeycomb formed article. The calcination is preferably performed at 400 to 500°C for 0.5 to 20 hours in an ambient atmosphere. There is no particular limitation on the calcination and firing methods, and firing can be performed by the use of an electric furnace, a gas furnace, or the like. As the firing conditions, firing is preferably performed at 1300 to 1500°C for 1 to 20 hours in an inert atmosphere such as nitrogen or argon.

Next, as shown in Fig. 9, the bonding material 5 is filled into each of the slits 15 of the honeycomb formed article 30 and hardened. As a method for filling the bonding material 5 into the slits 15, there may be employed a method where the bonding material 5 slurried by being dispersed in a dispersion medium such as water is filled into the slits 15. As the slurried bonding material, there may be employed slurry obtained by adding water to a mixture of inorganic fibers, colloidal silica, clay, SiC particles, organic binder, a resin balloon, and a dispersant and kneading them.

Upon filling the slurry into the slits 15, it is preferable to wrap a tape or the like around the outer periphery of the honeycomb fired article 30 lest the slurry should leak out. As the material for the tape wrapped around the outer periphery of the honeycomb fired article 30, an impermeable material such as polyester can be employed. In this case, when slurry is tried to be filled in a state that the honeycomb fired article 30 remain still, there is a case that the slurry does not spread uniformly in the slits 15 because the dispersion medium is absorbed by the partition walls. Therefore, in such a case, it is preferable to fill slurry under pressure with vibrating the honeycomb fired article 30 by a vibrator. As the vibrator, for example, there may be used the Small Type Vibration Testing Machine (product name) produced by Asahi Seisakusho Co. , Ltd.

In addition, in order to allow the slurry to enter the slits 15 more easily and uniformly, it is preferable to subject the inner walls of the slits 15 (outer peripheral walls of the segments 3) to a water repellent treatment. As an example of the water repellent treatment, it is preferable to spray slurry containing SiC particles. After filling the slurry into the slits 15, drying at 100°C or more is preferably performed. By the drying, the slurry is hardened in the slits 15 to form a shape corresponding with the slit shape, that is, a shape having continuously increasing thickness from the end portions to the central portions in the axial direction of the cells.

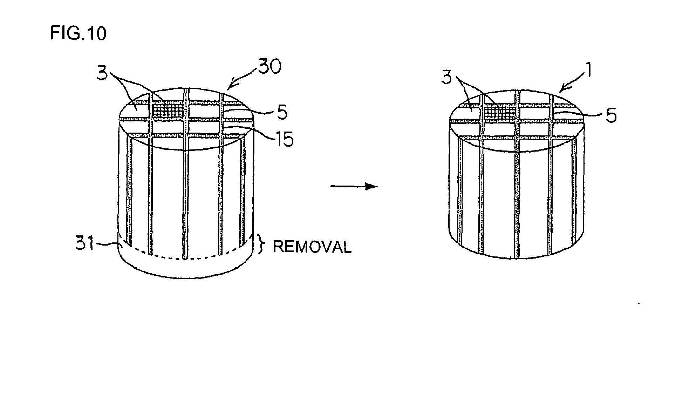

Next, as shown in Fig. 10, the portion 31 from the end face which the slits 15 do not reach to the end portions of the slits 15 of the honeycomb fired article 30 is removed by cutting off or the like. By removing the portion 31 in such a manner, the bonding material 5 is exposed to both the end faces to obtain a honeycomb structure 1 of the present invention where the segments 3 are unitarily bonded to one another with a bonding material 5. In the case of removing the aforementioned portion by cutting off, there is preferably used a disc-shaped multi grinding stone, a multi blade saw, a multi wire saw, or the like.

Then, as necessary, the honeycomb structure 1 is subjected to an outer peripheral coat treatment. As the outer peripheral coat treatment, there may be employed a method where an outer peripheral coat material is applied on the outer periphery of the honeycomb structure 1, followed by drying. As the outer peripheral coat material, there can be used a material obtained by mixing inorganic fibers, colloidal silica, clay, SiC particles, an organic binder, a resin balloon, a dispersant, water, and the like. In addition, there is no particular limitation on the method for applying the outer peripheral coat material, and there may be employed a method where the material is coated with a rubber spatula with rotating a product on a potter's wheel.

Incidentally, as described above, in the case that some of the bonding materials extending in the axial direction of the cells in a cross section in parallel with the axial direction of the cells of the honeycomb structure have continuously increasing thickness from the end portions toward the central portion in the axial direction of the cells with the other bonding materials having a uniformed thickness from the end portions toward the central portion in the axial direction of the cells as conventional ones, the slits for filling slurry for forming a bonding material having continuously increasing thickness from the end portions toward the central portion in the axial direction of the cells are formed in the honeycomb formed article, and the slits for filling slurry for forming a bonding material having a uniform thickness from the end portions toward the central portion in the axial direction of the cells are formed in a honeycomb fired article after firing the honeycomb formed article.

In addition, as described above, when a honeycomb structure where open portions of the cells are plugged is desired, plugging may be performed to a honeycomb structure obtained by the aforementioned manufacturing method, or plugging may be performed to a honeycomb formed article or a honeycomb fired article in a stage in the manufacturing process in the aforementioned manufacturing method. In the case of plugging before removing the portion from the end face which the slits do not reach to the end portions of the slits of the honeycomb fired article, since it is necessary to maintain the plugged state even after the portion is removed, it is necessary to fill the plugging material to be longer by the length of the portion to be removed.

There is no particular limitation on the plugging method, and there may be employed the following method. After bonding a sheet on one side end face of a honeycomb formed article, holes are made in positions corresponding with the cells to be plugged of the sheet. Then, the end face having the sheet bonded thereto of the honeycomb formed article is immersed in the plugging slurry obtained by slurrying constituent materials for the plugging, to fill the plugging slurry into the open end portions of the cells to be plugged through the holes of the sheet. Then, for the other side end face of the honeycomb formed article, the cells not plugged on the one side end face is plugged in a method similar to the method of the plugging on the one side end face. As the constituent materials, the same materials as the materials for the honeycomb formed article are preferably used.

Also, in the case of performing the plugging not for a honeycomb formed article, but for a honeycomb fired article or a honeycomb structure obtained by the aforementioned manufacturing method, plugging can be performed basically in a similar method. However, in this case, after filling the plugging slurry, it is necessary to fire again to sinter the plugging portions.

### Example

Hereinbelow, the present invention will be described in more detail on the basis of Example. However, the present invention is by no means limited to these Examples.

(Examples 1 to 4)
As the ceramic raw materials, a SiC powder and a metal Si powder were mixed at a mass ratio of 80:20 to obtain a mixture, and then methyl cellulose and hydroxypropoxymethyl cellulose as forming auxiliaries, starch and water-absorbing resin as pore formers, a surfactant, and water were added to the mixture, which was kneaded with a vacuum kneader to obtain kneaded clay.

The kneaded clay was formed into a honeycomb shape by the use of an extruder and subjected to high-frequency dielectric heating drying, followed by drying at 120°C for 2 hours by the use of a hot air dryer to obtain a cylindrical honeycomb formed article having a partition wall thickness of 310 µm, a cell density of about 46.5 cells/cm² (300 cells/sq.in.), a radius of a bottom face of 145 mm, and a length of 160 mm.

Regarding the honeycomb formed article obtained above, end portions of the cells were plugged in such a manner that each of the end faces shows a checkerwise pattern. As the filler for the plugging, the same material as that for the honeycomb formed article was used.

After the plugging, the honeycomb formed article was dried at 120°C for 5 hours by the use of a hot air drier. Then, slits were formed to obtain a honeycomb formed article having slits. The slit were formed by the use of a disc-shaped multi grinding stone (Ultra-High Speed Grinding Machine (product name) produced by ELB Corporation). As the honeycomb formed article 20 shown in Fig. 7, three parallel slits and other three parallel slits perpendicular to the above three parallel slits were formed on one side end face to obtain 16 segments 3. The interval between parallel slits was 36 mm. The length (depth) of each slit in the axial direction of the honeycomb formed article was 155 mm.

After forming the slits, the honeycomb formed article was degreased (calcined) at about 450°C for 5 hours by the use of an ambient furnace with a deodorizer in an ambient atmosphere and fired at about 1450°C for 5 hours in the Ar inert atmosphere to obtain a porous honeycomb fired article where SiC crystal particles were bonded with Si.

A bonding material was slurried and filled into the whole slits of the honeycomb fired article and dried at 150°C for one hour. As the bonding material, a mixture of aluminosilicate inorganic fibers and SiC particles was used. The slurry containing the bonding material contained water of 30 parts by mass, aluminosilicate of 30 parts by mass, and SiC particles of 30 parts by mass with respect to 100 parts by mass of the bonding material. Upon filling the slurry into the slits, a honeycomb fired article was put in a sealed container, a polyester tape was wrapped around the outer periphery lest the slurry should leak out from the outer periphery, and the slurry was allowed to enter the slits under pressure.

After the slurry filled into the slits was dried and the bonding material was hardened, the portion from the end face which the slits did not reach of the honeycomb fired article to the end portions of the slits was cut off by the use of a multi blade saw to expose the slit end portions to the end face so that the bonding materials should be present between segments from one side end face to the other side end face.

By the procedure described above, there were obtained honeycomb structures of Examples 1 to 4, where the bonding materials extending in the axial direction of the cells in a cross section in parallel with the axial direction of the cells have continuously increasing thickness from the end portions toward the central portion in the axial direction of the cells to have the end portion thickness A and the central portion thickness B as shown in Table 1. Incidentally, the end portion thickness A and the central portion thickness B in these honeycomb structures were adjusted by changing the width of the slits formed in a honeycomb formed article before firing.

(Comparative Examples 1 to 4)
Using an extruder, kneaded clay manufactured in the same method as in Example 1 to 4 was formed into a honeycomb shape. After high-frequency dielectric heating drying was performed, drying was performed at 120°C for 2 hours by the use of a hot air drier to obtain 16 honeycomb segment formed article (having a partition wall thickness of 310 µm, a cell density of 46.5 cells/cm² (300 cells/sq.in.)) of a rectangular parallelepiped shape with an end face side of 36 mm and a length of 155 mm for each of Comparative Examples.

Regarding the honeycomb segment formed articles obtained above, end portions of the cells were plugged in such a manner that adjacent cells were plugged in mutually opposite end portions and that both the end face showed a checkerwise pattern. As the filler for the plugging, the same material as the material for the honeycomb segment formed article was used.

After the plugging, the honeycomb segment formed article was dried at 120°C for 5 hours by the use of a hot air dryer, degreased (calcined) at about 450°C for 5 hours by the use of an ambient furnace with a deodorizer in an ambient atmosphere, and then fired at about 1450°C for 5 hours in the Ar inert atmosphere to obtain a porous honeycomb segment where SiC crystal particles were bonded with Si.

A slurried bonding material of the same components as in Examples 1 to 4 was applied on the outer peripheral face of the honeycomb segment to have a uniform thickness, and then another honeycomb segment was superposed thereon. The steps were repeated to obtain a honeycomb segment-layered body consisting of 16 honeycomb segments where 4 times 4 honeycomb segments were combined. Then, after the whole honeycomb segments were bonded together by suitably applying pressure from outside, or the like, they were dried at 150°C for 1 hour to harden the bonding material, and thereby a honeycomb segment bonded article was obtained. Then, the outer periphery was subjected to grinding so that the external shape of the honeycomb segment bonded article has a cylindrical shape of a bottom face radius of 145 mm and a length of 155 mm.

By the aforementioned procedure, there were obtained honeycomb structures of Comparative Examples 1 to 4, where the bonding materials extending in the axial direction of the cells in a cross section in parallel with the axial direction of the cells have the same thickness (end portion thickness A = central portion thickness B) over the axial direction of the cells as shown in Table 1. The thickness of the bonding materials in these honeycomb structures was adjusted by the thickness of the slurried bonding material applied on the outer peripheral portion.

[Evaluation on honeycomb structure]
The honeycomb structures of Examples 1 to 4 and Comparative Examples 1 to 4 were evaluated for the regeneration limit value and the pressure loss by the following method. The results are shown in Table 1.

(Regeneration limit value)
The honeycomb structure was used as a DPF, and the soot deposition amount was sequentially increased to perform regeneration (soot combustion) to confirm the limit where a crack was generated. In the first place, a ceramic non-expansion mat was wrapped as a holding material on the outer peripheral face of the honeycomb structure obtained above, and the honeycomb structure was pressed into a can made of SUS409 to obtain a canning structure. Then, combustion gas containing soot generated by combustion of diesel fuel light oil was allowed to flow in from one side end face of the honeycomb structure and to flow out from the other side end face, thereby depositing soot in the honeycomb structure. Then, after once cooling the structure down to room temperature, combustion gas containing oxygen at a certain proportion at 680°C was allowed to flow in from the one side end face of the honeycomb structure, and the flow rate of the combustion gas was decreased when the pressure loss of the honeycomb structure was lowered to quickly combust soot. After that, the presence/absence of a crack in the honeycomb structure was confirmed. The test was repeated by starting from the soot deposition amount of 4 g/liter and increasing the amount by 0.1 g/liter until a crack generation was confirmed. The measurement results of the regeneration limit value shown in Table 1 shows values based on the measurement result of the honeycomb structure of Comparative Example 1. That is, values obtained by deducting the measurement results of the regeneration limit value of the honeycomb structure of Comparative Example 1 from the measurement result (average value of 5 time measurement (N=5) for each honeycomb structure) of the regeneration limit value (soot deposition amount upon initial crack generation) of each honeycomb structure are shown.

(Pressure loss)
Pressure loss of a honeycomb structure was measured by the use of an evaluation standard wind tunnel (filter pressure loss measurement apparatus described in JP-A-2005-172652). The flow rate of the fluid in this measurement was 10 Nm³/min. and temperature upon the experiment was 25°C. The measurement results of the pressure loss shown in Table 1 shows values based on the measurement result of the honeycomb structure of Comparative Example 1. That is, values are shown by a ratio of the value obtained by deducting the measurement results of the pressure loss of the honeycomb structure of Comparative Example 1 from the measurement result (average value of 5 time measurement (N=5) for each honeycomb structure) of the pressure loss of each honeycomb structure to the measurement result of pressure loss of the honeycomb structure of Comparative Example 1 are shown.

**Table 1**

| | Bonding material thickness | A (mm) | B (mm) | B/A | Pressure loss (%) | Regeneration limit value (g/liter) |
|---|---|---|---|---|---|---|
| Comp. Ex. 1 | Uniform | 1.0 | 1.0 | 1 | Standard | Standard |
| Comp. Ex. 2 | Uniform | 2.0 | 2.0 | 1 | 4 | +0.5 |
| Comp. Ex. 3 | Uniform | 3.0 | 3.0 | 1 | 7 | +0.5 |
| Comp. Ex. 4 | Uniform | 4.0 | 4.0 | 1 | 10 | +0.8 |
| Example 1 | Center>End | 1.0 | 1.5 | 1.5 | 0 | +0.3 |
| Example 2 | Center>End | 1.0 | 2.0 | 2 | 0 | +0.5 |
| Example 3 | Center>End | 1.0 | 3.0 | 3 | 0 | +1.0 |
| Example 4 | Center>End | 1.0 | 4.0 | 4 | 0 | +0.5 |

As shown in Table 1, each of the honeycomb structures of Examples 1 to 4, where the end portion thickness was 1.0 mm and the central portion thickness was 1.5 to 4.0 mm (1.5 to 4 times the end portion thickness) in the axial direction of the cells of the bonding material showed high regeneration limit value though pressure loss was equivalent to that of Comparative Example 1, where the bonding material had a uniform thickness of 1.0 mm over the axial direction of the cells. On the other hand, Comparative Example 2, where the bonding material had a uniform thickness of 2.0 mm over the axial direction of the cells, Comparative Example 3, where the bonding material had a uniform thickness of 3.0 mm over the axial direction of the cells, and Comparative Example 4, where the bonding material had a uniform thickness of 4.0 mm over the axial direction of the cells, showed deterioration in pressure loss though they showed a higher regeneration limit value than that of Comparative Example 1.

The present invention can suitably be used as a dust-trapping filter such as a DPF.

## Claims

1. A honeycomb structure obtained by unitarily bonding a plurality of honeycomb segments each having a plurality of cells separated and formed by porous partition walls and extending through between two end faces with a bonding material in a direction perpendicular to an axial direction of the cells,
wherein at least a part of the bonding material extending in the axial direction of the cells in a cross section in parallel with the axial direction of the cells of the honeycomb structure has continuously increasing thickness from end portions toward a central portion in the axial direction of the cells.

2. The honeycomb structure according to Claim 1, wherein the central portion has a thickness of 1.0 to 4.0 mm in the bonding material having continuously increasing thickness from the end portions toward the central portion in the axial direction of the cells.

3. The honeycomb structure according to Claim 1 or 2, wherein, when the thickness of the end portions and the thickness of the central portion are determined as A and B, respectively, in the bonding material having continuously increasing thickness from the end portions toward the central portion in the axial direction of the cells, the B/A value is 2 to 4.

4. The honeycomb structure according to any one of Claims 1 to 3, wherein plugging is performed in open portions of predetermined cells in one side end face and open portions of the other cells in the other side end face.

5. A method for manufacturing a honeycomb structure comprising the steps of:
forming kneaded clay obtained by kneading a forming raw material to manufacture a honeycomb formed article having a plurality of cells separated and formed by partition walls and extending through between two end faces,
forming a plurality of slits from one end face of the honeycomb formed article toward the other end face without reaching the other end face to divide the honeycomb formed article into a plurality of segments in a slit formation region in the axial direction of the cells,
firing the honeycomb formed article to obtain a honeycomb fired article,
filling a bonding material into the slits in the honeycomb fired article and curing the bonding material, and
removing the portion from the end face which the slits do not reach to the end portions of the slits of the honeycomb fired article.
